# EUROPEAN PATENT APPLICATION

(11) **EP 4 800 225 A1**
(43) Date of publication of application: **02.09.2026**
(21) Application number: 25160904.6
(22) Date of filing: 28.02.2025
(51) Int. Cl.: F01K 15/02, F01K 23/02

(54) **POWER TRAIN, POWER SYSTEM, AND METHOD FOR OPERATING THE LATTER**

(71) Applicant: Airbus S.A.S., 31700 Blagnac (FR)
(72) Inventor: Kühn, Lars, 82024 Taufkirchen (DE); Carretero Benignos, Jorge, 82024 Taufkirchen (DE); Coste, Jean-Dominique, 82024 Taufkirchen (DE)
(74) Representative: OTN Airbus SAS

(57) **Abstract**

The invention relates to a mobile power train (18) for connecting to a mobile reactor (12) for generating thermal power (14) based on an exothermal reaction triggered by electric power (16) supplied to the reactor (12), the power train (18) including a heat engine (20) for converting thermal energy into mechanical energy and an electric generator device (28) for converting mechanical energy into electric energy and being mechanically connected to the heat engine (20).

## Description

The invention relates to a power train, a power system, a vehicle, and a method for operating a power system.

Energy storage and provision on board aircraft and ships that require large amounts of energy is currently only possible in the form of fossil fuels. The energy to power large aircraft and ships can currently only be provided by burning fossil fuels on board. Electrical energy cannot be stored on board in sufficient quantities to power large vehicles. Fully electric drive systems are also complex and currently too heavy for such vehicles. Burning hydrogen at high altitudes as an ecological solution is controversial as a long-term solution due to the contrail problem.

Three fundamental interests may derive from this:
1) Decoupling the fuel chain and the associated storage from the generation of large propulsive forces. The ideal technology preferably requires very small amounts of fuel, which should be non-fossil and abundant;
2) Combustion of fossil and non-fossil fuels should be avoided in order not to release emissions such as CO₂, NOₓ, or water at high altitudes; and
3) The on-board power systems for energy supply and propulsion should be provided with sufficient power for the entire duration of the journey, should fit into the vehicle in terms of size and weight, and should allow for payloads to make the transport task economically feasible.

Nuclear fusion holds the promise of a more sustainable future. It has a very high energy yield, and as opposed to nuclear fission, generates very little, shorter lifespan radioactive byproducts from its reaction, nor has any risk of reactor meltdown. Until recently, the technology was incrementally developed under large-scale scientific experiments, with no clear view on industrialization.

Recent scientific and technological breakthroughs, combined with a shift from public to primarily private investment, have now enabled a handful of companies to develop nuclear fusion reactors that a) can be directly commercialized, and b) can be significantly miniaturized, enlarging their application potential. For example, the z-pinch technology may be suitable for vehicles, such as aircraft, due to its potential for mobility and onboard system adaptation. With respect to z-pinch fusion technology, it is referred to the following scientific literature:
[1] U. Shumlak; "Z-pinch fusion"; Journal of Applied Physics; 29 May 2020; 127 (20): 200901; https://doi.ora/10.1063/5.0004228; and
[2] B. Levitt, E. T. Meier, R. Umstattd, J. R. Barhydt, I. A. M. Datta, C. Liekhus-Schmaltz, D. A. Sutherland, B. A. Nelson; "The Zap Energy approach to commercial fusion." Phys. Plasmas 1 September 2023; 30 (9): 090603. https://doii.org/10.1063/5.0163361.

The object of the invention is to improve a power system with respect to a mobile use.

To achieve this object, the invention provides a mobile power train according to claim 1. A power system, a vehicle, and a method for operating a power system are subject-matter of the parallel claims. Advantageous embodiments of the invention are subject-matter of the dependent claims.

In one aspect, the invention provides a mobile power train for connecting to a mobile reactor for generating thermal power based on an exothermal reaction triggered by electric power supplied to the reactor. The power train includes a heat engine for converting thermal energy into mechanical energy and an electric generator device for converting mechanical energy into electric energy. The electric generator device is mechanically connected to the heat engine. The heat engine is configured for operating a working fluid in a closed cycle. The closed cycle is thermally connectable to the reactor for supplying mechanical power from the heat engine to the electric generator device. The electric generator device is electrically connectable to the reactor for supplying electric power from the electric generator device to the reactor. The power train is interactively configured for supplying, based on thermal power generated by the reactor, the reactor with sufficient electric power for triggering the exothermal reaction.

In this context, the term "interactively" shall mean to provide a combined effect and/or advantage by a combination of purposes and/or features. Thus, the term shall go beyond the meaning of a mere juxtaposition or aggregation of effects and/or advantages, but rather relates to a combination of purposes and/or features providing an interaction producing a synergistic effect and/or advantage beyond the juxtaposition or aggregation. Here, the term "interactively" may mean that a power balance of the power train may be positive or advantageous. By pre-sizing and technical analysis of power and efficiency balances, as well as weight and volume estimates, the inventors found basic feasibility even without optimization.

Preferably, the working fluid corresponds and/or is based on a supercritical and/or compressed substance.

Preferably, the substance corresponds and/or is based on air, nitrogen, H₂O, and/or CO₂.

Preferably, the electric generator device is superconductively connectable to the reactor and/or is configured partly or fully superconductively.

Preferably, the heat engine includes a cooling device for cooling the working fluid in the closed cycle.

Preferably, the cooling device is configured for converting thermal energy of the working fluid into propulsive force, traction, or thrust. For example, the cooling device may be configured for expansion of the working fluid for cooling and, optionally, for generating propulsive force.

Preferably, the heat engine includes a turbine for converting thermal energy of the working fluid into mechanical energy.

Preferably, the closed cycle corresponds to and/or is based on a Brayton cycle.

Preferably, the power train further comprises a controlling device for controlling the exothermal reaction based on electric power from the electric generator device.

Preferably, the power train further comprises a mechanical propulsor device for converting mechanical energy into propulsive force, the mechanical propulsor device being mechanically connected to the heat engine, the mechanical propulsor device preferably including a propeller, fan, and/or nozzle.

Preferably, the power train further comprises an electric system, the electric system being electrically connected to the electric generator device, the electric system preferably including an electric propulsor device for converting electric energy into propulsive force, an electric battery for storing electric energy, and/or an electric consumer for consuming electric power.

In another aspect, the invention provides a mobile power system. The power system comprises a mobile reactor for generating thermal power based on an exothermal reaction triggered by electric power supplied to the reactor, and a mobile power train according to any of the preceding embodiments. The heat engine is thermally connected to the reactor and the electric generator device is electrically connected to the reactor.

Preferably, the reactor includes a mobile nuclear reactor for harnessing thermal power from a nuclear reaction of a fuel, the nuclear reaction being triggered by electric power and preferably being a nuclear fusion reaction, more preferably a nuclear fusion reaction of deuterium and/or tritium as fuel.

The nuclear reactor may include a reactor chamber for confining the fuel in form of a plasma. The nuclear reactor may include an electric source device for providing electric power through the plasma for inducing the nuclear fusion reaction. The nuclear fusion reaction preferably includes an inherent confinement-, heating-, and compression-regime to avoid heavy and large magnet arrangements, heaters, and optics for focusing laser systems. The electric source device may be configured as a capacitor bank that is triggered to apply a (e.g., pulsed) voltage between two or more electrodes of the reactor chamber.

Preferably, the power system comprises a plurality of power trains according to any of the preceding embodiments, and a common reactor for generating thermal power based on an exothermal reaction triggered by electric power supplied to the common reactor, the power trains respectively being connected to the common reactor.

Any feature, aspect, and/or advantage that is described herein with respect to embodiments of the power system may optionally apply to embodiments of the power train, and vice versa.

In another aspect, the invention provides a vehicle, preferably an aircraft, including a power train and/or a power system according to any of the preceding embodiments.

Any feature, aspect, and/or advantage that is described herein with respect to embodiments of the vehicle may optionally apply to embodiments of the power train and/or the power system, and vice versa.

In another aspect, the invention provides a method for operating a mobile power system, the power system including:
- a mobile reactor for generating thermal power based on an exothermal reaction triggered by electric power supplied to the reactor; and a mobile power train, the power train including:
- a heat engine for converting thermal energy into mechanical energy, the heat engine being configured for operating a working fluid in a closed cycle, the closed cycle being thermally connected to the reactor; and
- an electric generator device for converting mechanical energy into electric energy, the electric generator device being mechanically connected to the heat engine and electrically connected to the reactor; the method comprising:
   a) Generating thermal power by the reactor based on the exothermal reaction triggered by electric power supplied to the reactor;
   b) Transferring thermal power generated by the reactor from the reactor to the heat engine;
   c) Converting, by the heat engine, thermal power generated by the reactor into mechanical power; and
   d) Converting, by the electric generator device, mechanical power from the heat engine into sufficient electric power for supplying the reactor therewith for triggering the exothermal reaction.

Any feature, aspect, and/or advantage that is described herein with respect to embodiments of the method may optionally apply to embodiments of the power train, the power system, and/or the vehicle, and vice versa.

Preferred embodiments of the invention may be summarized as follows:
Embodiments of the invention may be used for propulsion of aircraft, shipcraft, and/or spacecraft.

Embodiments of the invention preferably enable a clean, tank- and combustion-free onboard energy and propulsion system to power aircraft, shipcraft and spacecraft. Embodiments of the invention may be a solution for the decarbonization of air traffic and marine traffic.

Embodiments of the invention are preferably configured as an apparatus and/or architecture that includes two main subsystems:
(A) one or more reactors, preferably fusion power units (FPUs) based on the concept of nuclear fusion to provide energy onboard; and
(B) one or more powertrains (PT) including a sCO₂ turbine, a fan (and, optionally, a gearbox) to provide thrust, a generator, and power electronics (GenSet) to convert mechanical energy coming from the turbine to electrical energy to provide onboard electrical power/energy;
(C), optionally, a fan and/or propeller unit can also be connected to the generator via a power network using power electronics to control the speed and torque of the electric motor required for propulsion or thrust.

The apparatus and/or architecture preferably provides one or more of the following three categories of onboard energy/power:
(a) mechanical energy/power for thrust;
(b) electrical energy/power for onboard systems, input for the reactor, for example the FPU, and optional for thrust; and/or
(c) thermal energy/power for temperature management.

The two subsystems (reactor, e.g. FPU, and PT) are preferably connected to each other via a heat exchanger (HX), which may transfer thermal energy of the reactor into the working gas for the sCO₂ turbine.

Embodiments of the invention may also cover apparatuses and/or architectures (based on the described principle) that use multiple subsystems and its items and connect them in different ways to increase redundancy and to ensure safety risks in operations to an acceptable level.

Embodiments of the invention may be applied to aircraft, shipcraft, spacecraft, and/or as a transportable system.

Accelerated activities in the field of commercialization of fusion technology may disrupt the way providing onboard energy in aviation, maritime or naval, but also transportable applications and stationary applications.
- Alternative fusion concepts, such as SFS z-pinch, show potential for mobile applications of an FPU;
- Decoupling fuel chain, fuel storage, and/or fuel combustion from the onboard energy supply;
- Pre-sizing in terms of energy, performance, weight, and size shows feasibility;
- sCO₂ turbines with a closed gas circuit as a Brayton circuit may enable combustion-free thermal-mechanical energy conversion;
- Supercritical carbon dioxide sCO₂ may be well suited due to its physical properties;
- Combustion-free onboard energy supply and powertrains for propulsion would make the air and/or ship traffic climate-friendly and sustainable and would enable large ZEROe airplanes but also navy applications.

The FPU, which may be based on nuclear fusion concepts, that may enable small, scalable, modular systems, like the z-pinch concept) is preferably a pulsed system, e.g., as disclosed in [2].

The sCO₂ powertrain preferably includes one, several, or all of the following:
(a) a sCO₂ turbine to convert thermal power into mechanical power,
(b) a generator connected to the shaft of the sCO₂ turbine to convert mechanical power into electrical power for
   (i) recirculation to drive the FPU and
   (ii) onboard electrical systems and parasitic loads, and/or
(c) a gearbox and a fan to generate thrust.

The fuel consumption of the reactor, for example the FPU, is considered negligible herein.

Initial pre-sizing and technical analysis of the power and efficiency balances, as well as weight and volume estimates, show basic feasibility even without optimization.

Preferred embodiments of the invention may have one, several, or all of the following advantages and effects:
- a small, scalable power system, in particular power train, that needs no magnets, lasers, optics or additional heaters that would drive the weight and the volume significantly;
- a modular concept with potential for mobile applications; and/or
- possible combination with a fusion concept: a pulsed system that provides power on demand; sheared-flow-stabilized z-pinch fusion; strong current driven through the pinch compressed by forces of the self-magnetic field.

Preferred embodiments of the invention may further have one, several, or all of the following advantages and effects:
- Supercritical carbon dioxide-based power cycles;
- indirectly heated power cycle;
- propulsor units can be direct connected to the heat engine and/or be part of the electrical drive train;
- applicable to boiler-type (here, for example: fusion power unit, FPU); and/or
- combustion gases and cycle working fluid are separated in a closed loop.

In brief, a reactor (FPU) is preferably used to indirectly heat or fire a working fluid, e.g., (supercritical) CO₂, through a heat exchanger, possibly like supercritical steam cycles. This cycle may be a non-condensing closed loop Brayton cycle with heat addition and rejection on either side of the expander.

Energy may be extracted from the sCO₂ as it is expanded in the turbine. Remaining heat may be recovered from the stream post-expansion via recuperators and used to preheat the compressed CO₂ returning to the primary reactor. This recovery of waste heat in the recuperators preferably limits the heat rejection from the cycle and improves efficiency.

Additionally, the ability to modulate the temperature of the supercritical CO₂ at the bottom of the cycle without condensing preferably provides potential for dry cooling with either low or no water.

The power train may include an electrical power train (like a hybrid electrical system) with a heat engine instead of a combustion engine. The generator may be connected via power electronics to the high power/high voltage bus of the onboard network. This bus may provide electric power to onboard systems, electrical driven propulsors, and for the reactor (FPU). The bus may also be connected to an electrical onboard battery like a storage system.

Embodiments of the invention are now explained in more detail with reference to the accompanying drawings of which
- Fig. 1: shows a first embodiment of a mobile power system;
- Fig. 2: shows a second embodiment of the power system;
- Fig. 3: shows a third embodiment of the power system; and
- Fig. 4: shows an embodiment of a method for operating the power system.

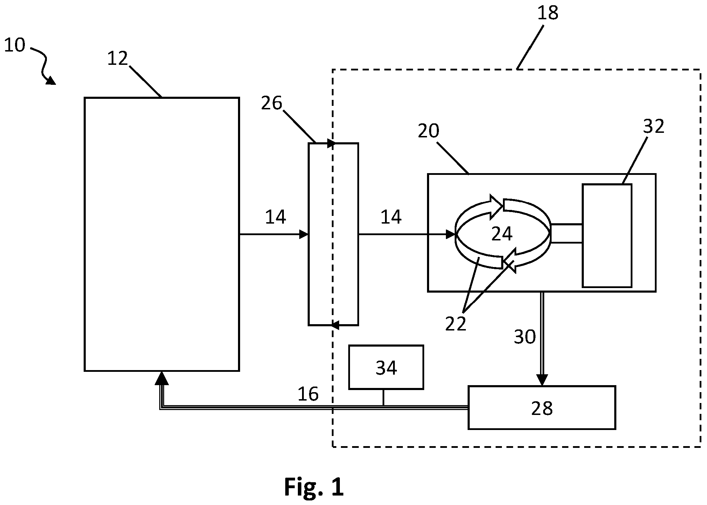

Fig. 1 shows a first embodiment of a mobile power system 10.

The power system 10 includes a reactor 12 for generating thermal power 14 and a mobile power train 18. The thermal power 14 is generated based on an exothermal reaction triggered by electric power 16 supplied to the reactor 12. The exothermal reaction may be a nuclear reaction and/or a chemical reaction.

The power train 18 includes a heat engine 20 for converting thermal energy into mechanical energy. For example, the heat engine 20 may include a turbine converting thermal energy into mechanical energy.

The heat engine 20 operates a working fluid 22 in a closed cycle 24. The working fluid 22 may be a supercritical substance, such as supercritical carbon dioxide. The closed cycle 24 may be a Brayton cycle.

The closed cycle 24 is thermally connected to the reactor 12. In the embodiment shown in Fig. 1, the thermal connection between the reactor 12 and the closed cycle 24 is provided by a heat carrier and/or exchanger device 26 of the power system 10. The heat carrier and/or exchanger device 26 may be included in the power train 18 and/or the reactor 12. The heat carrier and/or exchanger device 26 carries thermal energy from the reactor 12 and transfers thermal energy to the closed cycle 24.

The heat engine 20 further includes a cooling device 32 for cooling the working fluid 22 in the closed cycle 24. The cooling device 32 may further be configured for converting thermal energy into propulsive force.

The power train 18 further includes an electric generator device 28 for converting mechanical energy into electric energy. The electric generator device 28 is mechanically connected to the heat engine 20. The heat engine 20 is connected to the electric generator device 28 for supplying mechanical power 30 thereto.

The electric generator device 28 is further electrically connected to the reactor 12. The electric connection between the electric generator device 28 and the reactor 12 may be normal conducting for lower power classes and superconductive for higher power classes. The electric connection may be provided by a high-power electrical board network. Additionally, or alternatively, the electric generator device 28 may be configured partly or fully superconductively.

The electric generator device 28 is connected to the reactor 12 for supplying electric power 16 thereto. The electric generator device 28 may additionally be connected to the cooling device 32 for supplying electric power 16 thereto.

The power train 18 further includes a controlling device 34 for controlling the exothermal reaction based on electric power 16 from the electric generator device 28. The controlling device 34 may switch the supply of electric power 16 to the reactor 12 on and/or off, e.g., periodically and/or pulsed. The controlling device 34 may further control an amount of electric power 16 that is supplied from the electric generator device 28 to the reactor 12. Thus, an amount of thermal power 14 generated based on the exothermal reaction may be controlled indirectly by the controlling device 34, as well.

The power train 18 is interactively configured for supplying the reactor 12 with sufficient electric power 16 for triggering the exothermal reaction. In other words, a power balance of the power train 18 may be positive or advantageous. In yet other words, the power system 10 can be considered as a closed system and operated in a self-sustaining manner. In yet other words, the power train 18 may be interactively or recursively configured for supplying, based on thermal power 14 generated by the reactor 12, the reactor 12 with sufficient electric power 16 for triggering the exothermal reaction.

For example, an efficiency of the heat engine 20 may be in a range from 20 % to 60 %, more preferably in a range from 30 % to 50 %, even more preferably about 45 %. An efficiency of the electric generator device 28 may be in a range from 70 % to 99 %, more preferably in a range from 80 % to 99 %, even more preferably about 95 %. An efficiency of a transfer of thermal energy from the reactor 12 to the heat engine 20, e.g. by the heat carrier and/or exchanger device 26, may be in a range from 75 % to 99 %, more preferably in a range from 85 % to 99 %, even more preferably about 98 %. An efficiency of a transfer of mechanical energy from the heat engine 20 to the electric generator device 28 may be close to 100 %. An efficiency of a transfer of electric energy from the electric generator device 28 to the reactor 12 may be close to 100 %.

In an example, the reactor 12 may include a mobile nuclear reactor for harnessing thermal power 14 from a nuclear reaction of a fuel. The nuclear reaction may then be triggered by electric power 16. For example, the nuclear reaction may be a nuclear fusion reaction of deuterium and/or tritium as fuel. The nuclear reactor may include a reactor chamber for confining the fuel in form of a plasma. The nuclear reactor may further include an electric source device for providing electric power 16 through the plasma for inducing the nuclear fusion reaction. For example, the electric source device may generate the plasma by pulsed discharge. Therefore, the electric source device may include one or more capacitors. The generated thermal power 14 may be in a range around 200 MW.

The heat carrier and/or exchanger device 26 may further breed the fuel or a component thereof by capture of neutrons generated by the nuclear fusion reaction. For example, the heat carrier and/or exchanger device 26 may breed tritium by capture of neutrons. The heat carrier and/or exchanger device 26 may include a plasma-facing component for sustaining thermal energy from the nuclear fusion reaction. The plasma-facing component may include, for example, a liquid lead-lithium alloy.

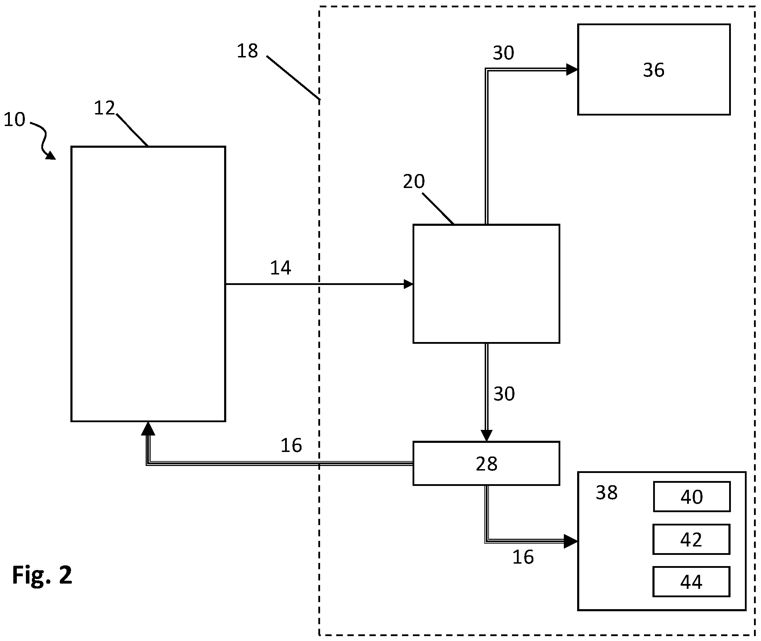

Fig. 2 shows a second embodiment of the power system 10.

In this case, the power train 18 of the power system 10 includes a mechanical propulsor device 36 and an electric system 38.

The mechanical propulsor device 36 is configured for converting mechanical energy into propulsive force. The heat engine 20 is mechanically connected to both, the electric generator device 28 and the mechanical propulsor device 36, for supplying mechanical power 30 thereto.

The electric generator device 28 is electrically connected to both, the reactor 12 and the electric system 38, for supplying electric power 16 thereto. The electric connection may be respectively provided by the high-power electrical board network. The electric system 38 may include an electric propulsor device 40 for converting electric energy into propulsive force, an electric battery 42 for storing electric energy, and/or an electric consumer 44 for consuming electric power 16.

The power train 18 is interactively configured in such a manner that in addition for supplying the reactor 12 with sufficient electric power 16 for triggering the exothermal reaction, the mechanical propulsor device 36 may be supplied with mechanical power 30 and/or the electric system 38 may be supplied with electric power 16. In other words, the power balance of the power train 18 may be positive or advantageous. In yet other words, the power system 10 can be considered as a closed system and operated in a self-sustaining manner.

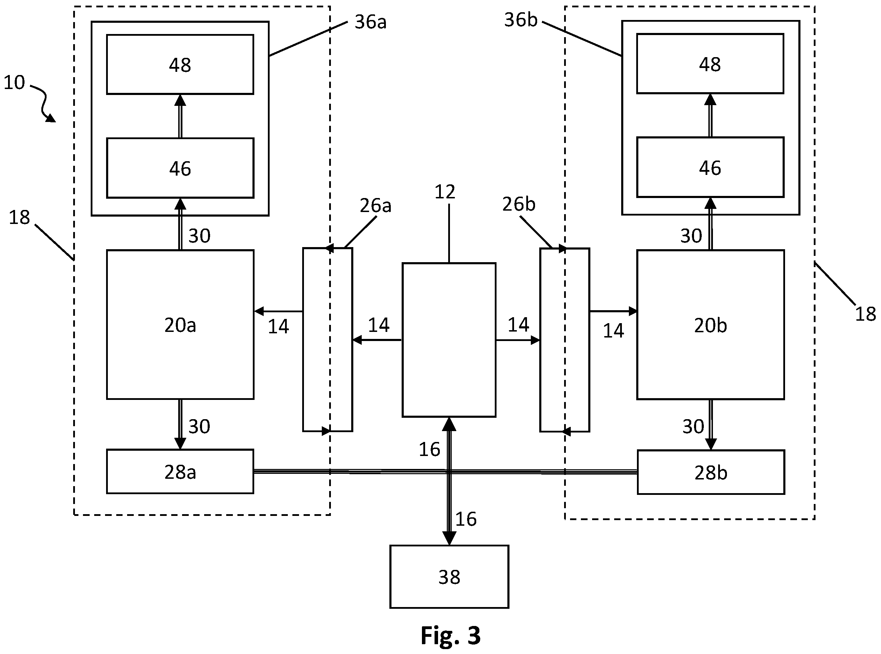

Fig. 3 shows a third embodiment of the power system 10.

In the power system 10 as shown in Fig. 3, the power system 10 includes a first mechanical propulsor device 36a, a second mechanical propulsor device 36b, and the electric system 38.

The first mechanical propulsor device 36a and the second mechanical propulsor device 36b each include a gearbox 46 for transmitting mechanical energy and a propeller, fan, and/or nozzle 48 for converting mechanical energy into propulsive force.

The power system 10 further includes a first and a second heat engine 20a, 20b, a first and a second heat carrier and/or exchanger device 26a, 26b, respectively thermally connected to the corresponding heat engine 20a, 20b, and a first and second electric generator device 28a, 28b, respectively mechanically connected to the corresponding heat engine 20a, 20b. Both electric generator devices 28a, 28b are connected to the common electric system 38.

The power system 10 further includes a single reactor 12, wherein both heat carrier and/or exchanger devices 26a, 26b are thermally connected to said reactor 12 and/or both electric generator devices 28a, 28b are electrically connected to said reactor 12. In other words, the power system 10 may include two power trains 18, both sharing a common reactor 12 via one or both of the electric connection and the thermal connection.

The power system 10 may be used in a vehicle, for example, an aircraft, having the first mechanical propulsor device 36a and the second mechanical propulsor device 36b arranged on opposite wings of the aircraft. The common electric system 38 may then be configured as an aircraft on-board electric system. Additionally, or alternatively, the plurality of power trains 18 may be used in a redundant manner, e.g., to increase safety.

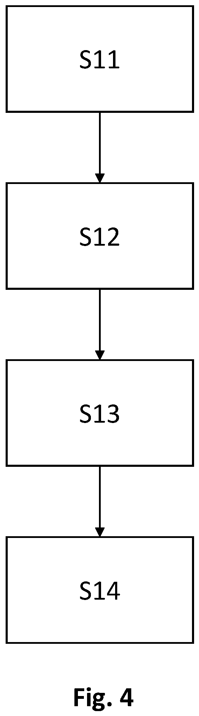

Fig. 4 shows an embodiment of a method for operating the mobile power system 10.

In a step S11, the method includes:
- Generating thermal power 14 by the reactor 12 based on the exothermal reaction triggered by electric power 16 supplied to the reactor 12.

In a step S12, the method includes:
- Transferring thermal power 14 generated by the reactor 12 from the reactor 12 to the heat engine 20.

In a step S13, the method includes:
- Converting, by the heat engine 20, thermal power 14 generated by the reactor 12 into mechanical power 30.

In a step S14, the method includes:
- Converting, by the electric generator device 28, mechanical power 30 from the heat engine 20 into sufficient electric power 16 for supplying the reactor 12 therewith for triggering the exothermal reaction.

### List of reference signs:

- 10: mobile power system
- 12: mobile reactor
- 14: thermal power
- 16: electric power
- 18: power train
- 20: heat engine
- 20a: first heat engine
- 20b: second heat engine
- 22: working fluid
- 24: closed cycle
- 26: heat carrier and/or exchanger device
- 26a: first heat carrier and/or exchanger device
- 26b: second heat carrier and/or exchanger device
- 28: electric generator device
- 28a: first electric generator device
- 28b: second electric generator device
- 30: mechanical power
- 32: cooling device
- 34: controlling device
- 36: mechanical propulsor device
- 36a: first mechanical propulsor device
- 36b: second mechanical propulsor device
- 38: electric system
- 40: electric propulsor device
- 42: electric battery
- 44: electric consumer
- 46: gearbox
- 48: propeller, fan, nozzle

## Claims

1. A mobile power train (18) for connecting to a mobile reactor (12) for generating thermal power (14) based on an exothermal reaction triggered by electric power (16) supplied to the reactor (12), the power train (18) including a heat engine (20) for converting thermal energy into mechanical energy and an electric generator device (28) for converting mechanical energy into electric energy and being mechanically connected to the heat engine (20), the heat engine (20) being configured for operating a working fluid (22) in a closed cycle (24), the closed cycle (24) being thermally connectable to the reactor (12) for supplying mechanical power (30) from the heat engine (20) to the electric generator device (28) and the electric generator device (28) being electrically connectable to the reactor (12) for supplying electric power (16) from the electric generator device (28) to the reactor (12), the power train (18) being interactively configured for supplying, based on thermal power (14) generated by the reactor (12), the reactor (12) with sufficient electric power (16) for triggering the exothermal reaction.

2. The power train (18) according to claim 1, wherein the working fluid (22) corresponds and/or is based on a supercritical and/or compressed substance, wherein the substance preferably corresponds and/or is based on air, nitrogen, H₂O, and/or CO₂.

3. The power train (18) according to any of the preceding claims, wherein the electric generator device (28) is superconductively connectable to the reactor (12) and/or is configured partly or fully superconductively.

4. The power train (18) according to any of the preceding claims, wherein the heat engine (20) includes a cooling device (32) for cooling the working fluid (22) in the closed cycle (24).

5. The power train (18) according to claim 4, wherein the cooling device (32) is configured for converting thermal energy of the working fluid (22) into propulsive force.

6. The power train (18) according to any of the preceding claims, wherein the heat engine (20) includes a turbine for converting thermal energy of the working fluid (22) into mechanical energy.

7. The power train (18) according to any of the preceding claims, wherein the closed cycle (24) corresponds to and/or is based on a Brayton cycle.

8. The power train (18) according to any of the preceding claims, further comprising a controlling device (34) for controlling the exothermal reaction based on electric power (16) from the electric generator device (28).

9. The power train (18) according to any of the preceding claims, further comprising a mechanical propulsor device (36) for converting mechanical energy into propulsive force, the mechanical propulsor device (36) being mechanically connected to the heat engine (20), the mechanical propulsor device (36) preferably including a propeller, fan, and/or nozzle (48).

10. The power train (18) according to any of the preceding claims, further comprising an electric system (38), the electric system (38) being electrically connected to the electric generator device (28), the electric system (38) preferably including an electric propulsor device (40) for converting electric energy into propulsive force, an electric battery (42) for storing electric energy, and/or an electric consumer (44) for consuming electric power (16).

11. A mobile power system (10), the power system (10) comprising a mobile reactor (12) for generating thermal power (14) based on an exothermal reaction triggered by electric power (16) supplied to the reactor (12), and a mobile power train (18) according to any of the preceding claims, the heat engine (20) being thermally connected to the reactor (12) and the electric generator device (28) being electrically connected to the reactor (12).

12. The power system (10) according to claim 11, wherein the reactor (12) includes a mobile nuclear reactor for harnessing thermal power (14) from a nuclear reaction of a fuel, the nuclear reaction being triggered by electric power (16) and preferably being a nuclear fusion reaction, more preferably a nuclear fusion reaction of deuterium and/or tritium as fuel.

13. The power system (10) according to claim 11 or 12, the power system (10) comprising a plurality of power trains (18) according to any of the claims 1 to 10, and a common reactor (12) for generating thermal power (14) based on an exothermal reaction triggered by electric power (16) supplied to the common reactor (12), the power trains (18) respectively being connected to the common reactor (12).

14. A vehicle, preferably an aircraft, including a power train (18) according to any of the claims 1 to 10 and/or a power system (10) according to any of the claims 11 to 13.

15. A method for operating a mobile power system (10), the power system (10) including:
- a mobile reactor (12) for generating thermal power (14) based on an exothermal reaction triggered by electric power (16) supplied to the reactor (12); and a mobile power train (18), the power train (18) including:
- a heat engine (20) for converting thermal energy into mechanical energy, the heat engine (20) being configured for operating a working fluid (22) in a closed cycle (24), the closed cycle (24) being thermally connected to the reactor (12); and
- an electric generator device (28) for converting mechanical energy into electric energy, the electric generator device (28) being mechanically connected to the heat engine (20) and electrically connected to the reactor (12); the method comprising:
a) Generating thermal power (14) by the reactor (12) based on the exothermal reaction triggered by electric power (16) supplied to the reactor (12);
b) Transferring thermal power (14) generated by the reactor (12) from the reactor (12) to the heat engine (20);
c) Converting, by the heat engine (20), thermal power (14) generated by the reactor (12) into mechanical power (30); and
d) Converting, by the electric generator device (28), mechanical power (30) from the heat engine (20) into sufficient electric power (16) for supplying the reactor (12) therewith for triggering the exothermal reaction.
